Europäisches Patentamt

(19) European Patent Office

Office européen des brevets

(11) Publication number : 0 285 210 B1

(12) # EUROPEAN PATENT SPECIFICATION

(45) Date of publication of patent specification :
20.03.91 Bulletin 91/12

(51) Int. Cl.⁵ : B67D 3/00, A47J 31/40

(21) Application number : 88200527.5

(22) Date of filing : 21.03.88

(54) Automatic beverage dispenser, comprising electromagnetically operated mixing means.

(30) Priority : 31.03.87 NL 8700760

(43) Date of publication of application :
05.10.88 Bulletin 88/40

(45) Publication of the grant of the patent :
20.03.91 Bulletin 91/12

(84) Designated Contracting States :
AT BE CH DE ES FR GB GR IT LI NL SE

(56) References cited :
EP-A- 0 127 970
DE-A- 2 401 001
GB-A- 2 069 355
NL-A- 7 708 667
US-A- 3 900 186

(73) Proprietor : KONINKLIJKE OLLAND
INDUSTRIE EN HANDELMIJ B.V.
Brabanthaven 1
NL-3433 PJ Nieuwegein (NL)

(72) Inventor : Evers, Lucas Alphonsus Maria
Hoornseschans 75
NL-3443 TK Nieuwegein (NL)
Inventor : van Reeuwijk, Willem
Molshoefweer 14
NL-3363 JH Sliedrecht (NL)

(74) Representative : den Boer, Jan Johannes, Ir. et
al
Octrooibureau Polak & Charlouis Laan Copes
van Cattenburch 80
NL-2585 GD The Hague (NL)

EP 0 285 210 B1

## Description

The invention relates to a mixing device for use in an automatic beverage dispenser, comprising a mixing reservoir provided with supply openings for a liquid and for a material to be mixed therewith and having at its lower end an outlet opening which leads to a stirrer housing provided with a discharge sprout, a stirrer means being placed for movement with said stirrer housing with its axis coincident with the vertical axis of said housing. Such a mixing device is known from DE-A-2 401 001. In this well-known device the stirrer means is fastened to the lower end of a drive shaft of an electromotor, the latter being mounted on a bracket fixed to the stirrer housing in a position above the stirrer housing and with its drive shaft extending downwardly through a cover on top of the stirrer housing. For cleaning purposes, the bracket may be detached and removed together with the drive motor and the stirrer means, provided that the cover is simultaneously removed. Due to the stirrer means being connected to the drive motor and its electrical terminals, cleaning of the stirrer is rather onerous and time-consuming. Moreover, due to the presence of a drive motor on top of the stirrer housing, the well-known dispenser is lacking compactness.

The present invention aims at remedying the above inconveniences. According to the invention this aim is achieved in that the stirrer means is independently removable and lies within the field of an electromagnet positioned outside and adjacent the stirrer housing, the stirrer means being movable in response to the electromagnetic field.

As a consequence of the features of the invention the electric drive motor of the well-known device is eliminated, so that the stirrer means has become a separate part which may be simply placed or hung into the stirrer housing and may be simply removed for and replaced after cleaning.

It is to be noted, that magnetic stirrer or activator apparatus are known per se. In this connection reference is made to EP-A-0 127 970, disclosing an apparatus for stirring culture mediums, comprising a vessel in which a floating stirrer, associated with a magnet, is caused by a moving magnetic field to rotate about a vertical supporting spindle, the field generating means being located laterally of said vessel.

GB-A-2 069 355 discloses a vibratory agitation apparatus, in which an agitator within an oil bath vessel comprises a permanent magnet resiliently suspended from a fixed point of the vessel and interacting with a magnetic field by an electromagnet mounted beneath the oil bath.

Apart from these well-known apparatus being designed for different purposes, the stirrer (agitator) in these apparatus is quite obviously not mounted for a quick removal for and replacement after cleaning.

Practical and/or preferred embodiments of the present invention are defined in the sub-claims.

The invention will hereunder be further explained with reference to the drawing in which embodiments of the mixing device according to the invention are shown.

Fig. 1 is a perspective view of a mixing device according to the present invention.

Fig. 2 is a perspective view of an electromagnet, adapted to be mounted around the lower part of the device of fig. 1.

Fig. 3 is a schematic vertical section with over it a plan view of the embodiment having a squirrel cage rotor.

Fig. 4 shows schematically in the same manner as fig. 3 the embodiment with translatory mixing fin.

Fig. 5 shows in the same manner as figures 3 and 4 the embodiment with alternately twisting mixing fin.

Fig. 6 shows a further embodiment with alternating rotation of the mixing fin.

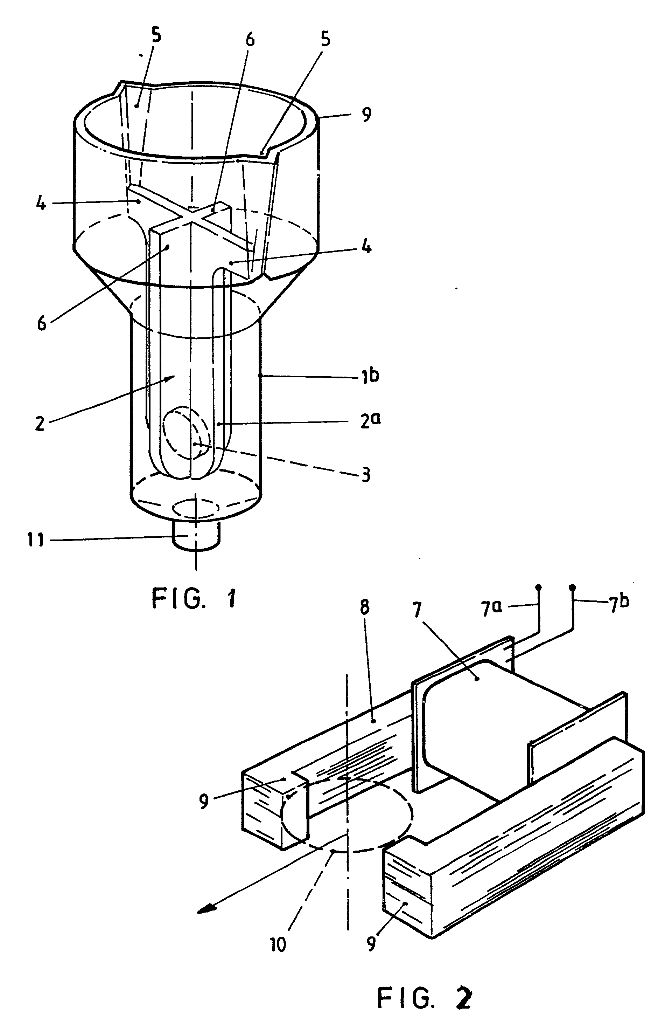

In the embodiment of the mixing device according to the invention, schematically shown in fig. 1, the stirrer is a mixing fin having a permanent magnet positioned perpendicular to the electromagnet field. The mixing beaker is integrally formed with the stirrer housing 1b. The mixing fin 2 is provided within the stirrer housing 1b and comprises an elongate flat part 2a in which, at its lower end, a permanent magnet 3 is incorporated. At its upper end the mixing fin is laterally extended into two ears 4 which are hung in slit-shaped recesses 5 in the wall of the mixing beaker 1a, said slits opening into the upper edge of the mixing beaker, so that the mixing fin may be entered through said slots into the stirrer housing and may be taken therefrom.

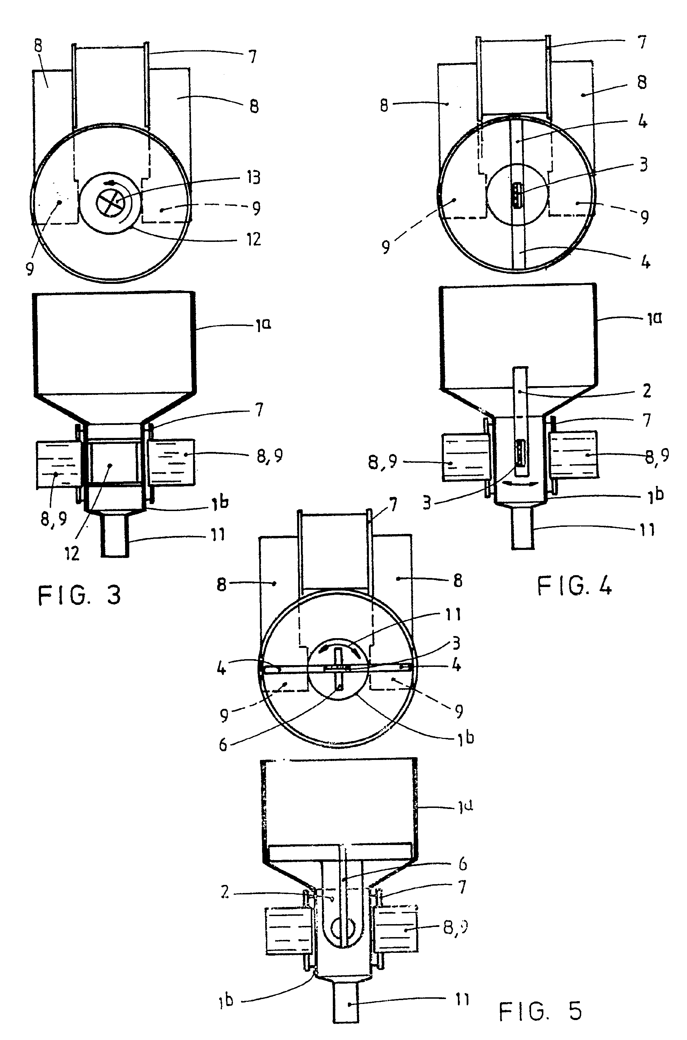

In fig. 5, which relates to the same embodiment, the north pole portion of the permanent magnet 3 has been shown hatched and the south pole portion without hatching. In certain cases it may be preferable to provide in the centre of the mixing fin perpendicular to its plane transverse ridges 6 as reinforcements.

Fig. 2 shows an electromagnet having a wire coil 7, the ends 7a, 7b of which are connectable to an alternating current source. The transverse beam of a U-shaped armature 8 is provided within the coil 7 and the armature comprises a stack of weak-iron sheets, at the free ends provided with pole shoes 9.

Through conductors (not shown) provided on a frame of the automatic beverage dispenser, the stirrer housing 1b may be placed centrally between the pole shoes 9, as indicated by the broken line circle 10 in fig. 2. The conductors are such that the centre of the permanent magnet 3, which may also be differently shaped from the cylinder shape shown, is in the common axis of the pole shoes 9.

If now the alternating field is connected to 7a en 7b, the poles at the end of the pole shoes 9 will become alternately the north pole and the south pole of the electromagnet field, so that the north pole side of the permanent magnet 3 is alternately attracted and rejected by both field poles, as well as the south pole side of the permanent magnet. The mixing fin 2 is manufactured from a resilient non-magnetic material, e.g. silicone rubber. The alternate attraction and rejection of the permanent magnet cause alternate twisting in two directions around the mixing fin axis as shown with the double arrow in fig. 5.

Liquid supplied to the top of the mixing beaker is now stirred by the alternate mixing fin movement and mixed and discharged at the lower end of the stirrer housing 1b through a conduit connected to a pivotable discharge sprout e.g. into a beaker placed below that sprout.

Fig. 4 shows a different embodiment of the device which corresponds to fig. 5 apart from the fact that the plane of the mixing fin 2 now lies perpendicular to the field direction of the electromagnet field. Thereby the fin will carry out a translatory or vibrating alternate movement according to the axis of the pole shoes 9 as the current is switched on. In this case the mixing fin 2 is not provided with a reinforcement ridge 6. This can also be omitted in the embodiments according to figures 2a and 5 or be differently shaped, dependent on the material of the fin.

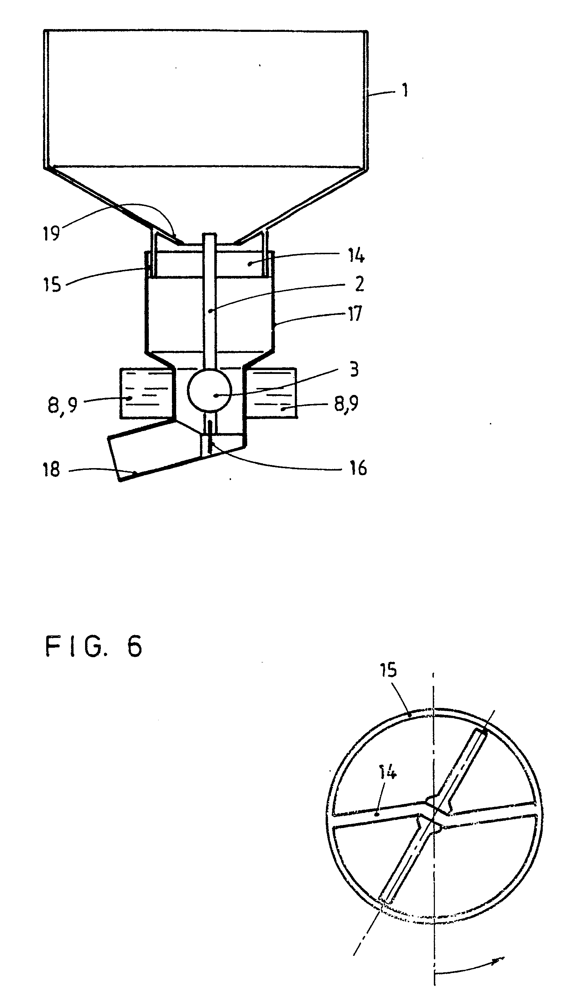

In fig. 6 a very advantageous modification of the embodiment of fig. 5 is shown. For it is that the twisting of the fin according to this figure 5 is maximum at the position of the magnet 3 and decreases towards the upper end of the spring whereby also the mixing effect decreases.

According to figure 6 the fin is connected at its upper end to a transverse strip 14 of preferably silicone rubber, which strip is fixed with its ends relative to the mixing beaker 1. This is here obtained by providing the strip as a diametral part of a ring 15 of the same material, which ring is to be placed somewhat clampingly in the lower end of the mixing beaker, e.g. but not necessarily in a recessed portion thereof. In this embodiment the mixing beaker and the stirrer housing form again two parts, wherein a cylindrical discharge end of the mixing beaker is placed within the ring 15 and with recesses (not shown) in its edge around the strip 14. The stirrer housing 17 has an integral discharge knee piece 18, which may be placed in a desired direction within the housing of the automatic beverage dispenser (not shown) in that the relative position between knee 18 and ring 15 may be freely selected. In the embodiments of figures 4 and 5 the knee piece (not shown) is a separate part relative to the housing 1 because the fin is fixedly positioned in angular position in the housing so that the angular position of the housing depends on the field direction of the electromagnet 7, 8, 9.

In order to prevent engagement between the lower end of the fin 2 and the housing wall, which would hinder the movement and cause noise, this end is fixed through a pin 16 relative to the wall of the knee piece (fin is liftable).

For preventing that the flow to be mixed and flowing along the bottom of the mixing beaker 1 downwardly enters the mixing beaker 1, the bottom of the beaker 1 may be extended by a so-called splash rim 19. For it is that the strip 14 and the stirrer 2 move the liquid strongly laterally and upwardly at that location.

Finally fig. 3 shows a further embodiment in which the stirrer comprises a hollow rotor 12, which is received within the cylindrical lower part 1b, which represents the trirrer housing. This mixing rotor receives in the manner of an electric squirrel cage motor a cage comprising bars extending parallel to the housing axis and manufactured of a conductive metal. If now the field of the electromagnet is energized, the rotor starts turning and carries out the mixing operation. It is advantageous therewith to provide a so-called starting coil, because otherwise the rotor does not start moving. A fin 13 having a cross-shaped section is provided within the hollow rotor into which the liquid is supplied from the mixing beaker 1a, said cross-shaped fin serving for producing the necessary mixing effect.

As has been said above already, the lower part of the mixing fins according to figures 2a, 4 and 5 may have a lateral dimension equal to the largest lateral dimension of the permanent magnet and the lower housing portion 1b directly over the magnet may be widened to about the diameter of the upper part 1a of the housing, if necessary, extending gradually or conically thereto. The portion of the mixing fin between the upper supporting end and the magnet 3 thereby may be widened and e.g. provided with vertical slots whereby said portion produces a so-called whisk-effect. Thereby the poleshoe ends may be approached towards the permanent magnet 3, so that the air gap becomes smaller and thereby the attraction force of the electromagnet becomes greater.

The mixing device as described is suitable for mixing powdered material, such as milk powder, cocoa powder, sugar and soup-powder with liquids, such as coffee, tea and hot water. Of course also different mixtures are possible.

## Claims

1. A mixing device for use in an automatic beverage dispenser, comprising a mixing reservoir provided with supply openings for a liquid and for a material to be mixed therewith and having at its lower end an outlet opening which leads to a stirrer housing provided with a discharge sprout, a stirrer means being placed for movement within said stirrer housing with its axis coincident with the vertical axis of said housing, characterized in that the stirrer means is independently removable and lies within the field of an electromagnet positioned outside and adjacent the stirrer housing, the stirrer means being movable in response to the electromagnetic field.

2. A device according to claim 1, characterized in that the stirrer means is formed as of a rotor (12), in which a metallic squirrel cage is incorporated.

3. A device according to claim 2, characterized in that the rotor (12) is loosely supported on a thrust journal (16) in the housing (1b) and in that the centre of the cage is situated, as viewed in the vertical direction, somewhat below the centre of the electromagnet field when the electromagnet (7-9) is not energized.

4. A device according to claim 1, characterized in that the stirrer means is shaped as a mixing fin (2), in the axis of which a permanent magnet (3) is incorporated, the field direction of which is parallel to the field of the electromagnet (7-9).

5. A device according to claim 1, characterized in that the stirrer is shaped as a mixing fin (2) and a permanent magnet (3) is incorporated in its axis, the field direction of which is perpendicular to the field of the electromagnet (7-9).

6. A device according to claim 5, characterized in that the mixing fin (2) is connected at its upper end to a strip (4) of resilient material, e.g. silicone rubber and extending transversely to the fin axis (fig. 5).

7. A device according to claim 6, characterized in that the strip (4) of resilient material extends along a diameter of a ring and is integral therewith.

8. A device according to claim 7, characterized in that the ring is adapted to be sealingly placed between the mixing reservoir (1a) and the stirrer housing (1b).

9. A device according to one or more of the preceding claims, characterized in that the mixing reservoir (1a) and the stirrer housing (1b) are formed in one piece.

10. A device according to one or more of the claims 4-8, characterized in that the permanent magnet (3) is provided in a lower portion of the mixing fin (2) having a smaller transverse dimension than the upper portion of the mixing fin.

11. A device according to any of the claims 4-10, characterized in that a portion of the mixing fin (2) is provided with slots, such that a whisk effect is produced.

**Ansprüche**

1. Mischvorrichtung zur Anwendung in einem automatischen Getränkespender, mit einem Mischbehälter versehen mit Zuführöffnungen für eine Flüßigkeit und für ein mit dieser zu mischendes Material, und mit am unteren Ende einer Auslaßöffnung die zu einem mit einer Tülle versehenen Rührgehäuse führt, in welchem Gehäuse ein Rührmittel bewegbar angeordnet ist, dessen Achse mit der Vertikalachse des Gehäuses zusammenfällt, dadurch gekennzeichnet, daß das Rührmittel unabhängig ausnehmbar ist und im Feld eines in der Nähe von und außerhalb des Rührgehäuses liegt, wobei das Rührmittel durch das Elektromagnetfeld in Bewegung versetzbar ist.

2. Vorrichtung nach Anspruch 1, dadurch gekennzeichnet, daß das Rührmittel wie ein Rotor (12) gebildet ist, in welchem ein Käfiganker aus Metall aufgenomen ist.

3. Vorrichtung nach Anspruch 2, dadurch gekennzeichnet, daß der Rotor (12) frei auf einem Drucklager (16) im Gehäuse (1b) aufliegt und daß die Mitte des Käfigs, in der Vertikalen Richtung geseben, etwa unter der Mitte des Elektromagnetsfelds liegt wenn der Elektromagnet (7-9) nicht erregt ist.

4. Vorrichtung nach Anspruch 1, dadurch gekennzeichnet, daß das Rührmittel wie ein Rührblatt (2) gebildet ist, in der Achse des selben ein Dauermagnet (3) eingearbeitet ist, dessen Feldrichtung parallel zum Feld des Elektromagnets (7-9) verläuft.

5. Vorrichtung nach Anspruch 1, dadurch gekennzeichnet, daß das Rührorgan wie ein Mischblatt (2) gebildet ist, in dessen Achse ein Dauermagnet (3) eingearbeitet ist, dessen Feldrichtung Senkrecht zum Feld des Elektromagnets (7-9) verläuft.

6. Vorrichtung nach Anspruch 5, dadurch gekennzeichnet, daß das Mischblatt (2) am oberen Ende mit einem Streifen (4) aus elastischem Werkstoff wie Silikonegummi verbunden ist, der sich quer zur Blattachse (fig. 5) erstreckt.

7. Vorrichtung nach Anspruch 6, dadurch gekennzeichnet, daß der Streifen (4) aus elastichem Material sich diametral zu einem Ring erstreckt und mit diesem zu einem Stück verbunden ist.

8. Vorrichtung nach Anspruch 7, dadurch gekennzeichnet, daß der Ring abdichtend zwischen dem Mischbehälter (1a) und dem Rührgehäuse (1b) einsetzbar ist.

9. Vorrichtung nach einem der vorangehenden Ansprüche, dadurch gekennzeichnet daß der Mischbehälter (1a) und das Rührgehäuse (1b) in einem Stück geformd sind.

10. Vorrichtung nach einem der vorangehenden Ansprüche 4-8, dadurch gekennzeichnet, daß der Dauermagnet (3) in einem unteren Abschnitt des Mischblatts (2) vorgesehen ist, wo die Querabmessung kleiner ist als im oberen Abschnitt des mischblattes.

11. Vorrichtung nach einem der vorangehenden Ansprüche 4-10, dadurch gekennzeichnet, daß ein Teil des Mischblattes (2) mit Schlitzen versehen ist, in der Weise, daß eine Quirlwirkung erzielt wird.

## Revendications

1. Dispositif de mélange à utiliser dans un appareil distributeur automatique de boissons, comprenant un réservoir de mélange pourvu d'ouvertures d'alimentation pour un liquide et pour une matière à mélanger avec lui et ayant, à son extrémité inférieure, une ouverture de sortie qui mène à un logement d'agitateur pourvu d'un jet d'évacuation, un moyen agitateur étant placé pour un mouvement dans ledit logement d'agitateur avec son axe coïncidant avec l'axe vertical dudit logement, caractérisé en ce que le moyen agitateur est indépendamment amovible et se trouve dans le champ d'un électro-aimant qui est placé en dehors et adjacent au logement de l'agitateur, le moyen agitateur étant mobile en réponse au champ électromagnétique.

2. Dispositif selon la revendication 1, caractérisé en ce que le moyen agitateur a la forme d'un rotor (12) où est incorporée une cage d'écureuil en métal.

3. Dispositif selon la revendication 2, caractérisé en ce que ce rotor (12) est supporté librement sur un tourillon de poussée (16), dans le logement (1b), et en ce que le centre de la cage est situé, en regardant en direction verticale, un peu en dessous du centre du champ de l'électro-aimant quand l'électro-aimant (7-9) n'est pas excité.

4. Dispositif selon la revendication 1, caractérisé en ce que le moyen agitateur est configuré en tant qu'ailette de mélange (2), dans l'axe de laquelle est incorporé un aimant permanent (3), dont la direction du champ est parallèle au champ de l'électro-aimant (7-9).

5. Dispositif selon la revendication 1, caractérisé en ce que l'agitateur a la forme d'une ailette de mélange (2) et un aimant permanent (3) est incorporé dans son axe, dont la direction du champ est perpendiculaire au champ de l'électro-aimant (7-9).

6. Dispositif selon la revendication 5, caractérisé en ce que l'ailette de mélange (2) est connectée à son extrémité supérieure à une bande (4) d'un matériau élastique comme du caoutchouc de silicone et s'étendant transversalement à l'axe de l'ailette (figure 5).

7. Dispositif selon la revendication 6, caractérisé en ce que l'ailette (4) en un matériau élastique s'étend le long d'un diamètre d'une bague et fait corps avec elle.

8. Dispositif selon la revendication 7, caractérisé en ce que la bague est adaptée à être placée de façon étanche entre le réservoir de mélange (1a) et le logement (1b) de l'agitateur.

9. Dispositif selon l'une quelconque des revendications précédentes caractérisé en ce que le réservoir de mélange (1a) et le logement (1b) de l'agitateur sont en une pièce.

10. Dispositif selon une ou plusieurs des revendications 4-8, caractérisé en ce que l'aimant permanent (3) est prévu dans une portion inférieure de l'ailette de mélange (2) ayant une plus petite dimension transversale que la portion supérieure de l'ailette de mélange.

11. Dispositif selon l'une quelconque des revendications (4-10) caractérisé en ce qu'une portion de l'ailette de mélange (2) est pourvue de fentes de façon à produire un effet de fouet.

FIG. 1

FIG. 2

FIG. 3

FIG. 4

FIG. 5

FIG. 6